# DEMANDE DE BREVET EUROPEEN

(11) **EP 4 653 820 A1**
(43) Date de publication de la demande: **26.11.2025**
(21) Numéro de dépôt: 25177922.9
(22) Date de dépôt: 21.05.2025
(51) Int. Cl.: G01D 5/353, G01L 1/24, G01K 11/3206

(54) **PROCÉDÉ DE MESURE DE VARIATIONS D'UNE PREMIÈRE ET D'UNE SECONDE GRANDEURS PHYSIQUES INDÉPENDANTES À L AIDE D'UN TRANSDUCTEUR OPTIQUE**

(30) Priorité: 24.05.2024 FR 2405353
(71) Demandeur: Commissariat à l'Energie Atomique et aux Energies Alternatives, 75015 Paris (FR)
(72) Inventeur: QUELENE, Jean-Baptiste, 91191 Gif-sur-Yvette Cedex (FR); LAFFONT, Guillaume, 91191 Gif-sur-Yvette Cedex (FR)
(74) Mandataire: INNOV-GROUP

(57) **Abrégé**

Ce procédé comporte :
- la mesure (122) d'une réponse spectrale d'un réseau de Bragg dans, respectivement, un premier et un second groupes de modes spatiaux, puis
- la détermination (130) d'une première amplitude de déplacement d'un premier pic de puissance dans la réponse spectrale du réseau de Bragg dans le premier groupe de modes spatiaux et la détermination (130) d'une seconde amplitude de déplacement d'un second pic de puissance dans la réponse spectrale du réseau de Bragg dans le second groupe de modes spatiaux, puis
- l'établissement (132) des variations de la première et de la seconde grandeurs physiques à partir des première et seconde amplitudes de déplacement déterminées.

## Description

L'invention concerne un procédé et un dispositif de mesure de variations d'une première et d'une seconde grandeurs physiques indépendantes à l'aide d'un transducteur optique.

Pour mesurer des grandeurs physiques telles que la température et une déformation mécanique, il est avantageux d'utiliser comme transducteur une fibre optique et un réseau de Bragg réalisé dans le cœur de cette fibre optique. En particulier, un tel transducteur est insensible aux perturbations électromagnétiques.

Le spectre de puissance du réseau de Bragg varie à la fois en fonction de la température et à la fois en fonction de la déformation mécanique. Ainsi, pour mesurer à l'aide du même réseau de Bragg à la fois une variation de température et à la fois une variation de la déformation mécanique, il faut être capable d'isoler les modifications du spectre de puissance du réseau de Bragg qui sont causées par la variation de température de celles qui sont causées par la déformation mécanique.

Pour cela, il a déjà été proposé d'utiliser des réseaux de Bragg ayant des structures particulières. Par exemple, l'article suivant propose d'utiliser un réseau de Bragg SFG (« Superstructure Fiber Grating ») inscrit dans une fibre optique monomode : Chi, H. et Al : "Simultaneous measurement of axial strain, temperature, and transverse load by a superstructure fiber grating," Optical Letter, OL 26(24), 1949-1951 (2001). Un autre exemple de l'état de l'art est représenté par l'article suivant qui utilise un réseau de Bragg incliné (« tilted Fiber Bragg Grating » en anglais) inscrit dans une fibre optique PM-FMF (« Polarization Maintaining Few Mode Fiber ») : Chongxi Wang et AI : « Simultaneous Temperature and Strain Measurements Using Polarization-Maintaining Few-Mode Bragg Gratings », Sensor 2019, 19, 5221.

De l'état de la technique est également connu de :
- CN113959471A,
- CN113670372A,
- Zhao Yunhe et Al : « Simultaneous directional curvature and temperature sensor based on a tilted few-mode fiber Bragg grating », Applied Optics, vol. 57, n°7, 28/02/2018, page 1671,
- Islam Aschry et Al : « Mode-division-multiplexing of absorption-based fiber optical sensors », Optics Express, vol. 24, n°5, 1/03/2016, page 5186,
- Lu Peng et Al : « Adaptive Mode Control for Few-Mode Fiber Based Sensors ans Sensor Networks », Journal of Lightwave Technology, IEEE, USA, vol. 35, N°16, 15/08/2017, pages 3562-3568.
Dans CN113959471A, il a été proposé d'exciter simultanément plusieurs groupes de modes d'une fibre optique contenant un réseau de Bragg à longue période et de mesurer les réponses spectrales de ce réseau de Bragg dans ces différents groupes de modes pour en déduire une mesure d'une température et une mesure d'une courbure.

Ainsi, pour isoler une variation de la température d'une variation de la déformation mécanique en utilisant un seul réseau de Bragg, il a déjà été proposé d'utiliser un réseau de Bragg ayant une structure particulière et/ou des fibres optiques ayant une structure particulière comme les fibres optiques PM-FMF. L'utilisation d'un réseau de Bragg ayant une structure particulière ou d'une fibre optique ayant une structure particulière complexifie la réalisation du transducteur optique et donc la mise en œuvre de tels procédés de mesure. L'excitation simultanée de plusieurs groupes de modes de la fibre optique rend complexe la mise en œuvre du procédé de mesure.

L'invention vise à proposer un procédé de mesure des variations de deux grandeurs physiques indépendantes à l'aide d'un seul réseau de Bragg qui soit plus simple à mettre en œuvre.

L'invention est exposée dans le jeu de revendications joint.

L'invention sera mieux comprise à la lecture de la description qui va suivre, donnée uniquement à titre d'exemple non limitatif et faite en se référant aux dessins sur lesquels :
- les figures 1, 3, 5 et 6 sont des illustrations schématiques de quatre architectures possibles pour un dispositif de mesure,
- la figure 2 est un organigramme d'un procédé de mesure à l'aide du dispositif de mesure de la figure 1, et
- la figure 3 est un organigramme d'un procédé de mesure à l'aide du dispositif de mesure de la figure 3.

Dans cette description, la terminologie, les conventions et les définitions des termes utilisés dans ce texte sont introduites dans un chapitre I. Ensuite, des exemples détaillés de modes de réalisation sont décrits dans un chapitre Il en référence aux figures. Dans un chapitre III, des variantes de ces modes de réalisation sont présentées. Enfin, les avantages des différents modes de réalisation sont précisés dans un chapitre IV.

### Chapitre I : Définitions, terminologies et conventions :

Dans les figures, les mêmes références sont utilisées pour désigner les mêmes éléments.

Dans la suite de cette description, les caractéristiques et fonctions bien connues de l'homme du métier ne sont pas décrites en détails.

Le symbole « * » désigne l'opération de multiplication scalaire.

Le domaine de l'optique désigne la plage contenant les longueurs d'onde habituellement utilisées en optique. Plus précisément, dans ce texte, le domaine de l'optique désigne la plage qui s'étend de 200 nm à 10000 nm et, fréquemment, de 200 nm à 5000 nm ou de 400 nm à 2000 nm.

Un groupe de modes spatiaux d'une fibre optique multimode est un groupe de modes spatiaux qui contient tous les modes spatiaux qui ont des constantes de propagation identiques ou quasiment identiques. Ainsi un mode de ce groupe peut se coupler très fortement à un autre mode du même groupe dès qu'il existe une très petite imperfection sur le trajet optique. A titre d'exemple, une très petite imperfection sur le trajet optique peut être une asymétrie du cœur de la fibre optique. Ces modes spatiaux qui peuvent se coupler très fortement ensemble sont aussi connus sous le terme de « modes dégénérés ». Ainsi, un groupe de modes spatiaux contient tous les modes qui ont le même indice effectif de propagation ou quasiment le même indice effectif de propagation. Les groupes de modes spatiaux varient en fonction des caractéristiques de la fibre optique multimode telles que sa géométrie et la variation de son indice de réfraction dans une direction transversale. La direction transversale est une direction qui est perpendiculaire à l'axe longitudinal de la fibre optique. Par exemple, les groupes de modes spatiaux ne sont pas les mêmes pour une fibre optique multimode à saut d'indice (« step index multimodal optical fiber » en anglais) et pour une fibre optique multimode dont l'indice de réfraction varie continûment le long d'une direction transversale.

Par la suite, l'expression « groupe de modes » désigne un groupe de modes spatiaux.

Le mot « mode » désigne un « mode spatial ». Chaque mode est décomposable en deux modes de polarisation orthogonales. Par la suite, sauf information contraire, le mot « mode » est utilisé pour désigner les deux polarisations orthogonales de ce mode. Ainsi, par exemple, lorsqu'il est indiqué qu'un mode est excité, à défaut d'information contraire, cela signifie que les deux modes de polarisation orthogonales sont simultanément excités.

Le mode correspondant à l'indice effectif le plus élevé est appelé mode fondamental. Le groupe de modes qui contient le mode fondamental ne comporte généralement que les deux modes fondamentaux de polarisations orthogonales. Ce groupe de modes qui comporte le mode fondamental est appelé « groupe du mode fondamental ».

Un groupe de modes excité est un groupe de modes dans lequel est transmis un signal optique d'excitation. Un groupe de modes est excité à partir du moment où au moins un mode de ce groupe est excité.

Un groupe de modes interrogé est un groupe de modes dans lequel la réponse spectrale d'un réseau de Bragg est mesurée. Un groupe de modes est interrogé à partir du moment où au moins un mode de ce groupe est interrogé, c'est-à-dire à partir du moment où la réponse spectrale de ce groupe est mesurée à partir d'un signal optique qui se propage dans au moins un mode de ce groupe.

L'indice effectif nₑ de propagation est aussi connu sous le nom de « constante de phase du mode ». Il est défini par la relation suivante : β = nₑ*2*π/λ, où β est la constante de phase et λ est la longueur d'onde du signal optique dans le vide. L'indice effectif de propagation d'une fibre optique dépend des dimensions du cœur de cette fibre optique et des matériaux formant ce cœur et la gaine optique de cette fibre optique. Il peut être déterminé expérimentalement ou par simulation numérique.

Dans ce texte, une réponse spectrale d'un groupe est un spectre de puissance d'un réseau de Bragg mesuré uniquement à partir de signaux optiques qui se propagent dans ce groupe particulier de modes d'une fibre optique multimode dans laquelle est réalisée ce réseau de Bragg. Ainsi, pour un analyseur spectral donné, un même réseau de Bragg présente autant de réponses spectrales d'un groupe qu'il y a de groupes de modes possibles dans la fibre optique multimode. Lorsqu'un groupe de modes comporte plusieurs modes, la réponse spectrale de ce groupe de modes peut être obtenue :
- uniquement à partir d'un signal optique qui se propage dans un seul des modes de ce groupe de modes, ou
- à partir des signaux optiques qui se propagent dans plusieurs des modes de ce groupe de modes.

Une « réponse spectrale d'un mode » ou « une réponse spectrale dans un mode » est un spectre de puissance du réseau de Bragg mesuré en utilisant uniquement les signaux optiques qui se propagent dans ce mode particulier. Cette réponse spectrale d'un mode peut être considérée à elle seule comme étant représentative de la réponse spectrale du groupe contenant ce mode particulier. Dans ce cas, la réponse spectrale dans ce groupe peut être considérée comme étant identique à la réponse spectrale de ce mode particulier de ce groupe.

Dans ce texte, l'expression « une réponse spectrale dans un groupe » désigne à la fois la réponse spectrale de ce groupe et la réponse spectrale d'un mode de ce groupe.

Dans ce texte, à défaut d'indication contraire, le terme « spectre de puissance » ou « spectre » désigne le spectre de puissance en réflexion. Le spectre de puissance en réflexion est le spectre de puissance du signal optique réfléchi par un composant optique. Un pic dans le spectre de puissance en réflexion correspond à une raie d'absorption dans le spectre de puissance en transmission du même composant optique.

Un réseau de Bragg est sensible à une grandeur physique lorsqu'une variation de cette grandeur physique entraîne un déplacement correspondant du spectre de puissance de ce réseau de Bragg.

Un coefficient S_{k,i} de sensibilité d'un réseau de Bragg à une grandeur physique est une constante définie par la relation suivante Δλᵢ = S_{k,i}*ΔGₖ, où :
- Δλᵢ est l'amplitude de la variation de la longueur d'onde à laquelle se situe le pic de réflexion du réseau de Bragg obtenue en réponse à une variation ΔGₖ de la grandeur physique à mesurer,
- i est un indice qui identifie un groupe particulier de modes, et
- k est un indice qui identifie la grandeur physique mesurée.

L'amplitude Δλᵢ est égale à l'écart entre la longueur d'onde λᵢ mesurée à laquelle se situe le pic de réflexion du réseau de Bragg dans le groupe i de modes et une longueur d'onde λ_{i,ref} de référence prédéterminée. Contrairement à la longueur d'onde λ_{i,ref}, la longueur d'onde λᵢ varie en fonction de la grandeur physique à mesurer.

Le terme « déformation mécanique » désigne :
- une force exercée sur la fibre optique qui étire longitudinalement le cœur de la fibre optique, et
- une force exercée sur la fibre optique qui provoque une courbure de la fibre optique à l'emplacement du réseau de Bragg.

### Chapitre II : Exemples de modes de réalisation

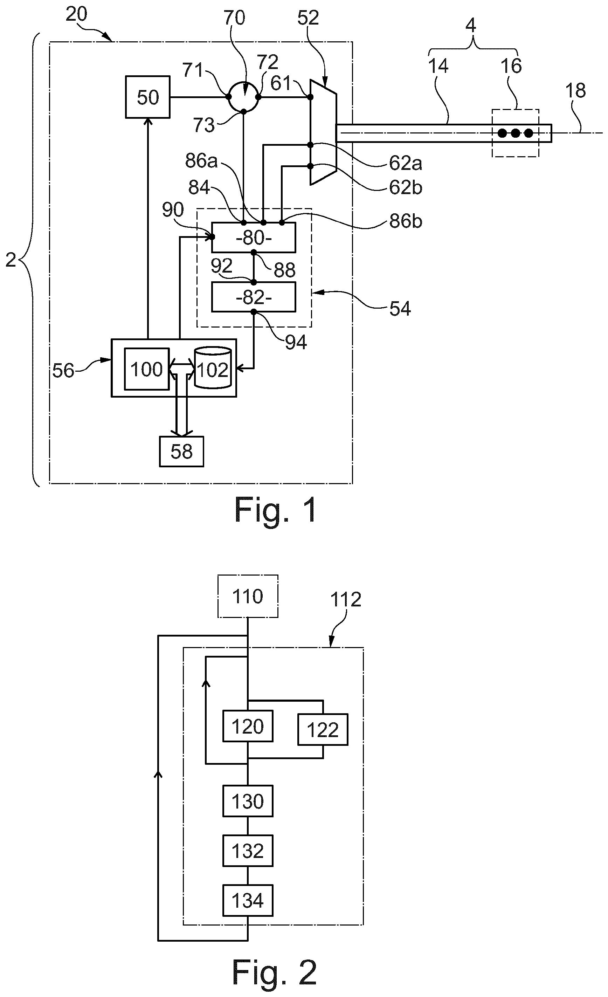

La figure 1 représente un dispositif 2 de mesure de deux grandeurs physiques indépendantes. Ainsi, ces deux grandeurs physiques peuvent varier indépendamment l'une de l'autre. Par exemple, ici, les deux grandeurs physiques à mesurer sont une température d'un milieu extérieur et une déformation mécanique.

Le dispositif 2 comporte un transducteur optique 4. Le transducteur 4 est exposé aux variations des deux grandeurs physiques à mesurer. Plus précisément, le transducteur 4 transforme une variation des deux grandeurs physiques à mesurer en des déplacements de pics de puissance dans des réponses spectrales respectives. Par exemple, chaque réponse spectrale comporte un seul pic de puissance maximal dans une plage de travail prédéterminée. Cette plage de travail a une largeur supérieure à 5 nm. Typiquement, sa largeur est également inférieure ou égale à 200 nm ou 120 nm. Ici, la largeur de la plage de travail est égale à 100 nm. La plage de travail est située à l'intérieur du domaine de l'optique.

Le transducteur 4 comporte une fibre optique multimode 14 et un réseau de Bragg 16.

La fibre 14 contient un cœur qui s'étend le long d'un axe longitudinal 18 et à l'intérieur duquel se propage les signaux optiques guidés par cette fibre. Ce cœur est entouré d'une gaine d'indice de réfraction différent pour guider les signaux optiques le long de l'axe 18. La fibre 14 est conformée pour autoriser la propagation des signaux optiques le long de l'axe 18 selon au moins deux groupes de modes différents. Typiquement, le nombre de groupes de modes différents peut être supérieur à trois ou cinq ou dix.

Le réseau de Bragg 16 est inscrit dans le cœur de la fibre 14. Ce réseau 16 est formé par une succession de motifs identiques disposés les uns après les autres dans une direction parallèle à l'axe 18. Ces motifs sont espacés les uns des autres par un pas régulier Λ. De préférence, le réseau 16 est un réseau de Bragg à pas court, c'est-à-dire que le pas Λ est inférieur à 10 µm ou 5 µm ou 1 µm. En effet, dans ce cas, la réponse spectrale du réseau de Bragg peut être mesurée à partir du signal optique réfléchi par ce réseau. De plus, le réseau 16 est capable de transférer une partie de l'énergie d'un signal optique reçu dans un groupe de modes particulier vers d'autres groupes de modes de la fibre optique 14. Grâce à cela, le réseau 16 génère des signaux optiques qui se propagent dans plusieurs groupes de modes en réponse à l'excitation d'un seul groupe de modes de la fibre optique 14. Typiquement, pour cela, la surface transversale des motifs du réseau 16 est inférieure à pₑ*S_{c14}, où :
- pₑ est un nombre réel supérieur à 0,01 et inférieur à 0,99, et
- S_{c14} est la surface de la section transversale du cœur de la fibre 14.
La surface transversale d'un motif est égale à la surface de la projection orthogonale de ce motif sur un plan orthogonal à l'axe 18 et qui traverse ce motif. Le nombre pₑ est souvent supérieur à 0,1 ou 0,2 et aussi typiquement inférieur à 0,9 ou 0,7 ou 0,5.

Chaque motif correspond à une brusque variation de l'indice de réfraction du cœur de la fibre 14. Typiquement, l'écart entre l'indice de réfraction du motif et l'indice de réfraction du cœur de la fibre 14 est supérieur à 0,2 ou 0,4.

Le réseau 16 présente une longueur d'onde λᵢ pour chaque groupe de modes, où l'indice i est un identifiant d'un groupe de modes de la fibre 14. La réponse spectrale du groupe i présente un pic de réflexion centré sur cette longueur d'onde λᵢ. Pour chaque groupe de modes utilisé pour mesurer les deux grandeurs physiques, la longueur d'onde λᵢ est située à l'intérieur de la plage de travail prédéterminée. De préférence, chaque longueur d'onde λᵢ est située sensiblement au milieu de la plage de travail. La longueur d'onde λᵢ du réseau de Bragg 16 est donnée par la relation (1) suivante : λᵢ = 2*nₑᵢ*Λ/m, où :
- λᵢ est la longueur d'onde pour le groupe de modes identifié par l'indice i,
- nₑᵢ est l'indice effectif du groupe de modes identifié par l'indice i,
- m est l'ordre du réseau de Bragg, et
- Λ est le pas du réseau 16.

Dans les modes de réalisation décrits ici, l'ordre m est inférieur à dix et, par exemple, égal à un.

Étant donné que l'indice effectif nₑᵢ varie en fonction du groupe de modes, il existe autant de longueurs d'onde λᵢ qu'il y a de groupes de modes possibles dans la fibre 14 pour un analyseur spectral donné.

Le dispositif 2 comporte aussi un analyseur spectral 20. L'analyseur spectral 20 est capable de mesurer des réponses spectrales du transducteur 4 puis d'établir les variations des deux grandeurs physiques à l'emplacement du réseau 16 à partir de ces réponses spectrales mesurées. Pour cela, l'analyseur spectral 20 est optiquement raccordé à une extrémité proximale de la fibre 14. L'autre extrémité de la fibre 14, dite « distale », est libre.

Par la suite, l'analyseur 20 est décrit dans le cas particulier où seul un premier et un second groupes de modes de la fibre 14 sont interrogés. Ici, le premier groupe de modes interrogé est le groupe du mode fondamental qui contient seulement le mode fondamental. Le second groupe de modes interrogé est le groupe de modes de la fibre 14 qui correspond à l'indice effectif le plus faible, c'est-à-dire à l'indice effectif le plus éloigné de l'indice effectif du groupe du mode fondamental. Le second groupe contient plusieurs modes. Pour simplifier les figures et les explications, la description des différents modes de réalisation du dispositif de mesure est faite dans le cas où seuls deux modes du second groupe de modes sont exploités. Toutefois, ce qui est décrit dans ce cas simplifié, s'applique au cas où tous ou pratiquement tous les modes du second groupe sont exploités pour réaliser les mesures des deux grandeurs physiques. De plus, dans le cas de l'analyseur 20, le groupe de modes excité est aussi le groupe du mode fondamental. Ainsi, dans ce mode de réalisation particulier, le premier groupe de modes est à la fois excité et interrogé.

A cet effet, l'analyseur 20 comporte :
- une source optique 50,
- un démultiplexeur modal 52 optiquement raccordé, par l'intermédiaire d'un connecteur optique, à l'extrémité distale de la fibre 14,
- un appareillage 54 d'acquisition optiquement raccordé au démultiplexeur modal 52,
- une unité électronique 56 de traitement électriquement raccordée à l'appareillage 54 pour recevoir des signaux électriques représentatifs des réponses spectrales acquises par l'appareillage 54, et
- une interface homme-machine 58, raccordée à l'unité 56, pour communiquer le résultat des mesures réalisées à un être humain.

Le démultiplexeur modal 52 comporte plusieurs ports d'entrée/sortie, chacun de ces ports d'entrée/sortie est associé à un seul mode respectif de la fibre 14. Lorsqu'un signal optique est reçu sur l'un de ces ports d'entrée/sortie, le démultiplexeur modal 52 transmet ce signal optique uniquement dans le mode de la fibre 14 associé à ce port d'entrée/sortie. Ainsi, le démultiplexeur 52 permet d'exciter un seul mode de la fibre 14 choisi parmi plusieurs modes possibles. A l'inverse, le démultiplexeur 52 permet aussi de diriger les signaux optiques qui se propagent simultanément dans plusieurs modes de la fibre 14, chacun vers le port d'entrée/sortie respectif associé à ce mode. Ainsi, le démultiplexeur modal 52 permet aussi de démultiplexer, c'est-à-dire de séparer, les différents signaux optiques qui se propagent simultanément dans des modes différents de la fibre 14.

Pour simplifier la figure 1, seuls trois ports d'entrée/sortie 61, 62a et 62b ont été représentés. Le port 61 est associé au mode fondamental. Les ports 62a et 62b sont associés à deux modes différents du second groupe de modes.

La source optique 50 émet un signal optique qui est utilisé pour exciter le premier groupe de modes de la fibre 14. Ici, la source optique 50 est une source large spectre, c'est-à-dire une source qui émet un signal optique dont le spectre de puissance recouvre simultanément la totalité de la plage de travail. Le signal optique émis n'est donc pas mono-fréquence.

Dans ce mode de réalisation, étant donné que le premier groupe de modes est à la fois excité et interrogé, la source optique 50 est raccordée au port 61 par l'intermédiaire d'un circulateur optique 70. Le circulateur optique comporte :
- un port 71 optiquement raccordé à la source optique 50 pour recevoir le signal optique d'excitation,
- un port 72 optiquement raccordé au port 61 du démultiplexeur 52 pour transmettre le signal optique d'excitation sur ce port 61, et
- un port 73 optiquement raccordée à l'appareillage 54 d'acquisition.

Le circulateur 70 permet donc :
- de transmettre, seulement sur le port 61, le signal optique d'excitation reçu sur le porte 71, et
- de transmettre, seulement sur le port 73, le signal optique réfléchi par le réseau de Bragg 16 dans le premier groupe de modes.

L'appareillage 54 d'acquisition mesure des réponses spectrales dans les groupes de modes interrogés. Dans ce premier mode de réalisation, l'appareillage 54 mesure des réponses spectrales dans plusieurs modes des groupes interrogés. Ces réponses spectrales dans les différents modes sont mesurées les unes après les autres. A cet effet, il comporte un commutateur optique 80 et un spectromètre monovoie 82.

Le commutateur 80 comporte trois ports d'entrée 84, 86a et 86b et un port de sortie 88. Les ports 84, 86a, 86b sont optiquement raccordés en permanence, respectivement, aux ports 73, 62a et 62b. Le commutateur 80 comporte aussi un port 90 de commande électriquement raccordé à l'unité 56. En fonction de la commande reçue sur ce port 90, le commutateur 80 commute entre les états suivants :
- un premier état où il raccorde optiquement seulement le port 84 au port 88,
- un deuxième état où il raccorde optiquement seulement le port 86a au port 88, et
- un troisième état où il raccorde optiquement seulement le port 86b au port 88.

Le spectromètre 82 comporte un seul port de mesure 92 optiquement raccordé en permanence au port 88 de sortie du commutateur 80. Le spectromètre 82 comporte aussi un port de sortie 94 électriquement raccordé à l'unité 56. Le spectromètre 80 mesure la réponse spectrale du signal optique reçu sur son port de mesure 92 et délivre la réponse spectrale mesurée sur son port 94. Ici, le spectromètre 82 comporte une pluralité de photodétecteurs qui mesurent simultanément la puissance du signal optique reçu pour un grand nombre de longueurs d'ondes différentes. Par exemple, le spectromètre 82 est un spectromètre à barrette. Ainsi, selon l'état du commutateur 80, le spectromètre 82 délivre sur le port 94 soit la réponse spectrale mesurée dans le premier mode, soit la réponse spectrale mesurée dans l'un des deux modes différents du second groupe, c'est-à-dire la réponse spectrale du signal optique reçu sur le port 62a ou sur le port 62b du démultiplexeur 52.

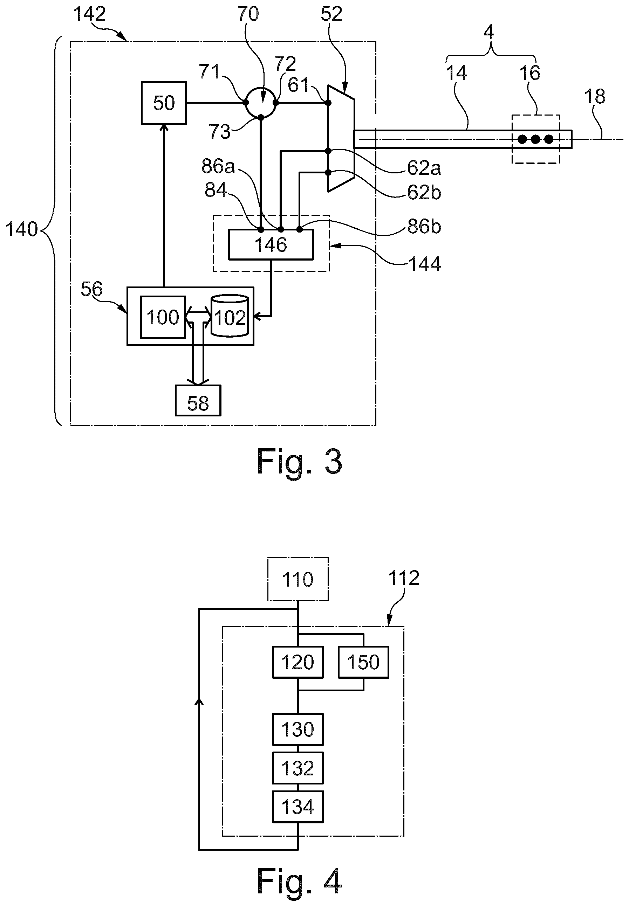

L'unité 56 est notamment configurée pour mettre en œuvre le procédé de la figure 2 ou 4. Pour cela, en particulier, l'unité 56 est programmée pour :
- déterminer les amplitudes Δλ₁ et Δλ₂ du déplacement des pics de puissance dans les réponses spectrales des premier et second groupes de modes interrogés, puis
- établir les variations des deux grandeurs physiques à mesurer à partir des amplitudes Δλ₁ et Δλ₂ déterminées.

Pour réaliser ces opérations, l'unité 56 comporte un microprocesseur programmable 100 et une mémoire 102 contenant les données et les instructions nécessaires pour exécuter le procédé de la figure 2 ou 4. En particulier, la mémoire comporte tous les coefficients S_{k,i} de sensibilité qui relient une variation de la k-ième grandeur physique à une variation de l'amplitude Δλᵢ, où :
- l'indice k est un identifiant de la grandeur physique, et
- l'indice i est un identifiant du groupe de modes interrogé.

Dans cet exemple, k est égal à un pour identifier la première grandeur physique et égal à deux pour identifier la deuxième grandeur physique. L'indice i est égal à un pour identifier le premier groupe de modes interrogé et égal à deux pour identifier le second groupe de modes interrogé.

Puisque les amplitudes Δλ₁ et Δλ₂ varient à la fois en fonction des première et seconde grandeurs physiques, ces amplitudes sont reliées aux variations de ces deux grandeurs physiques par le système (1) d'équations suivant : Δλ₁ = S_{1,1}*ΔG₁ + S_{2,1}*ΔG₂ et Δλ₂ = S_{1,2}*ΔG₁ + S_{2,2}*ΔG₂, où ΔG₁ et ΔG₂ sont les variations, respectivement, des première et deuxième grandeurs physiques. Ce système d'équations peut être résolu à partir du moment où le déterminant S_{1,1}*S_{2,2} - S_{2,1}*S_{1,2} est différent de zéro. Or, pour une même grandeur physique à mesurer, les coefficients S_{k,i} ne sont pas les mêmes selon le groupe de modes interrogé. De plus, les coefficients S_{k,i} ne sont pas les mêmes pour les première et seconde grandeurs physiques mesurées. Ainsi, en pratique, à l'aide du système (1) d'équations, il est toujours possible d'établir les valeurs des variations ΔG₁ et ΔG₂ à partir des amplitudes Δλ₁ et Δλ₂ mesurées.

Typiquement, les coefficients S_{k,i} sont déterminés de façon expérimentale en mettant en œuvre le procédé de la figure 2 pour des variations connues des première et seconde grandeurs physiques.

La mémoire 102 contient également les positions de référence λ_{1,ref} et λ_{2,ref} des pics de puissance dans les réponses spectrales, respectivement, du premier et du second groupes de modes. Typiquement, les positions de référence λ_{1,ref} et λ_{2,ref} sont déterminées de façon expérimentale en mesurant les positions des pics de puissances des réponses spectrales, respectivement, du premier et du second groupes de modes lorsque les valeurs des première et seconde grandeurs physiques sont égales à leurs valeurs de référence notées, respectivement, G_{1,ref} et G_{2,ref}. Par exemple, la valeur de référence de la première grandeur physique est une température ambiante de 25°C et la valeur de référence de la seconde grandeur physique correspond à l'absence de déformation mécanique du réseau 16.

La figure 2 représente un procédé de mesure des première et seconde grandeurs physiques à l'aide du dispositif 2.

Lors d'une phase 110 de calibration, les coefficients S_{k,i} et les positions λ_{1,ref} et λ_{2,ref} sont déterminés de façon expérimentale puis enregistrés dans la mémoire 102.

Ensuite, il est possible de procéder à une phase 112 de mesure des variations des première et seconde grandeurs physiques. Pour cela, le procédé de mesure exploite le fait que même lorsque un seul groupe de modes de la fibre 14 est excité, après réflexion par le réseau 16, une réponse spectrale du réseau 16 peut être mesurée dans d'autres groupes de modes de la fibre 14 que celui excité. Il a été aussi observé que lorsqu'un seul groupe de modes est excité, le pic de puissance observable dans la réponse spectrale d'un groupe de modes particulier n'est pas le résultat de la superposition de réponses spectrales de plusieurs groupes de modes différents. Ainsi, c'est seulement dans ces conditions qu'il est possible de mesurer précisément l'amplitude Δλᵢ du déplacement d'un pic de la réponse spectrale d'un groupe de modes particulier.

Ici, lors d'une étape 120, la source optique 50 émet un signal optique d'excitation. Par exemple, ce signal optique d'excitation est émis en continu. Ce signal optique d'excitation est transmis, par le circulateur 70, sur le port 61 du démultiplexeur 52. Le démultiplexeur 52 transmet ce signal optique d'excitation seulement dans le premier groupe de modes, c'est-à-dire ici dans le mode fondamental de la fibre 14. Le signal optique d'excitation se propage alors jusqu'au réseau 16 et le réseau 16 réfléchit seulement quelques longueurs d'onde de ce signal optique d'excitation dans chacun des groupes de modes. Le démultiplexeur 52 dirige alors les signaux optiques réfléchis dans chaque mode vers le port d'entrée/sortie associé à ce mode. Ainsi, les ports 61, 62a et 62b délivrent les signaux optiques réfléchis par le réseau 16, respectivement, dans le mode fondamental et dans deux modes distincts du second groupe de modes. C'est le spectre de puissance du ou des signaux optiques réfléchis dans un groupe particulier de modes qui forme la réponse spectrale de ce groupe de modes.

Le signal optique délivré par le port 61 est alors dirigé en continu, par le circulateur 70, vers le port 84 du commutateur 80. En parallèle, les signaux optiques délivrés sur les ports 62a et 62b sont transmis en continu sur les ports, respectivement 86a et 86b, du commutateur 80.

Ensuite, lors d'une étape 122, le commutateur 80 est commandé par l'unité 56 pour mesurer la réponse spectrale d'un mode particulier. Par exemple, lors de la première itération de l'étape 122, l'unité 56 commande le commutateur 80 pour le placer dans son premier état où il raccorde optiquement le port 84 au port 88.

En parallèle, lors de l'étape 122, le spectromètre 82 mesure la réponse spectrale du signal optique émis sur le port 88 du commutateur 80. Ainsi, lors de la première itération de l'étape 122, l'appareillage 54 mesure la réponse spectrale du mode fondamental puis transmet cette réponse spectrale mesurée à l'unité 56 qui l'acquière.

L'étape 122 est réitérée plusieurs fois. Lors des deuxième et troisième itérations de l'étape 122, l'unité 56 commande le commutateur 80 pour le placer dans, respectivement, le deuxième et le troisième états. Ainsi, après avoir réitéré l'étape 122 pour chaque mode pour lesquels une réponse spectrale doit être acquise, l'unité 56 a acquis chacune de ces réponses spectrales. Plus précisément, ici, l'unité 56 a acquis une réponse spectrale dans le premier groupe de modes et deux réponses spectrales dans le second groupe de modes.

Une fois que l'unité 56 a acquis chacune des réponses spectrales à mesurer, lors d'une étape 130, l'unité 56 détermine les amplitudes Δλ₁ et Δλ₂. Pour cela, dans ce mode de réalisation, l'unité traite chacune des réponses spectrales acquises pour en extraire la position λ_{i,j} du pic de puissance, où l'indice j est un identifiant d'un mode particulier dans le groupe i de modes. Ainsi, dans cet exemple de réalisation, lors de l'étape 130, l'unité extrait les positions λ_{1,1}, λ_{2,1} et λ_{2,2} du pic de puissance des réponses spectrales des signaux optiques délivrés sur les ports, respectivement, 61, 62a et 62b.

Les positions λ_{i,j} pour tous les modes d'un même groupe de modes sont théoriquement identiques. Ainsi, dans ce mode de réalisation, pour améliorer la précision de la mesure, les positions extraites des réponses spectrales mesurées dans différents modes d'un même groupe de modes sont moyennées. Par conséquent, dans cet exemple, la position λ₂ du pic de puissance de la réponse spectrale du second groupe de modes est prise égale à la moyenne arithmétique des positions λ_{2,1} et λ_{2,2}. Puisque le premier groupe comporte seulement le mode fondamental, la position λ₁ du pic de puissance de la réponse spectrale du premier groupe est prise égale à λ_{1,1}.

Ensuite, toujours lors de l'étape 130, l'unité 56 calcule l'écart entre les positions λ₁ et λ_{1,ref} pour obtenir l'amplitude Δλ₁ et l'écart entre les positions λ₂ et λ_{2,ref} pour obtenir l'amplitude Δλ₂.

Une fois les amplitudes Δλ₁ et Δλ₂ déterminées, lors d'une étape 132, l'unité 56 établit les valeurs des variations des variations ΔG₁ et ΔG₂ des première et seconde grandeurs physiques à partir des amplitudes Δλ₁ et Δλ₂ déterminées. Pour cela, lors de l'étape 132, l'unité 56 résout le système (1) d'équations.

Lors d'une étape 134, l'unité 56 commande l'interface 58 pour communiquer les variations établies à un être humain. Les variations mesurées peuvent être communiquées sous la forme des valeurs relatives ΔG₁ et ΔG₂ ou sous la forme de valeurs absolues G_{1,ref} + ΔG₁ et G_{2,ref} + ΔG₂.

La figure 3 représente un dispositif 140 de mesure identique au dispositif 2 sauf que l'analyseur spectral 20 est remplacé par un analyseur spectral 142. L'analyseur spectral 142 est identique à l'analyseur spectral 20 sauf que l'appareillage 54 d'acquisition est remplacé par un appareillage 144 d'acquisition. L'appareillage 144 comporte un interféromètre multivoie 146 qui comporte les ports d'entrée 84, 86a et 86b. L'interféromètre 146 est capable de mesurer simultanément les réponses spectrales des signaux optiques reçus sur ses entrées 84, 86a et 86b. Par exemple, à cet effet, l'interféromètre 146 comporte trois exemplaires de l'interféromètre 82, les trois ports 92 de mesure de ces trois exemplaires formant les ports 84, 86a et 86b de mesure. Ainsi, l'interféromètre 146 est capable de mesurer en même temps les réponses spectrales des signaux optiques réfléchis par le réseau 16 dans le mode fondamental et dans les deux modes distincts du second groupe de modes. Dans ces conditions, l'usage d'un commutateur optique tel que le commutateur 80 est omis.

La figure 4 représente le procédé de mesure à l'aide du dispositif 140 de mesure. Ce procédé est identique au procédé de la figure 2 sauf que l'étape 122 est remplacée par une étape 150. Lors de l'étape 150, le spectromètre 146 mesures simultanément les réponses spectrales des signaux optiques reçus sur ses trois ports 84, 86a et 86b. Ainsi, contrairement à ce qui a été décrit dans le cas de procédé de la figure 2, ici, les trois réponses spectrales utilisées pour déterminer les amplitudes Δλ₁ et Δλ₂ sont simultanément mesurées puis transmises à l'unité 56.

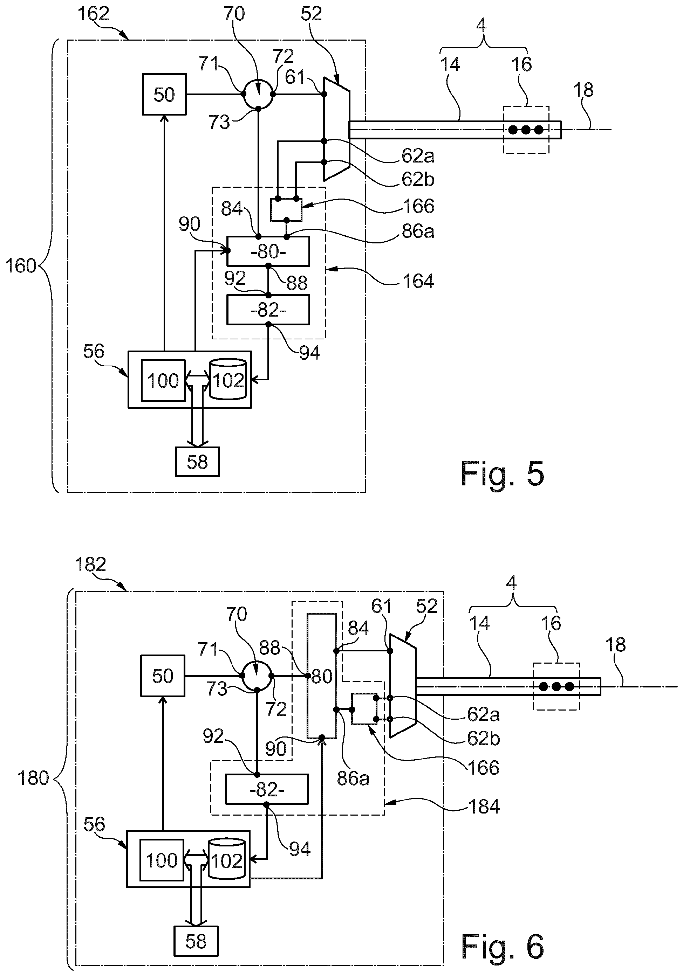

La figure 5 représente un dispositif 160 de mesure identique au dispositif 2 sauf que l'analyseur spectral 20 est remplacé par un analyseur spectral 162. L'analyseur spectral 162 est identique à l'analyseur spectral 20 sauf que l'appareillage 54 d'acquisition est remplacé par un appareillage 164 d'acquisition. L'appareillage 164 est identique à l'appareillage 54 sauf qu'il comporte en plus un coupleur optique 166. Le coupleur optique 166 comporte deux entrées optiquement raccordées, respectivement, aux ports 62a et 62b du démultiplexeur 52. Le coupleur optique 166 comporte aussi une sortie optiquement raccordée au port 86a du commutateur optique 80. Le coupleur 166 permet de raccorder simultanément les ports 62a et 62b au même port 86a du commutateur optique 80. Ainsi, le coupleur optique 166 délivre sur le port 86a un signal optique correspondant à la combinaison des signaux optiques délivrés sur les ports 62a et 62b. La réponse spectrale de ce signal optique combiné présente un rapport signal sur bruit amélioré par rapport à la réponse spectrale du signal délivré seulement sur le port 62a ou 62b.

Le fonctionnement du dispositif 160 est identique au fonctionnement du dispositif 2 sauf que :
- lors de l'étape 122 le commutateur 80 est commandé pour commuter uniquement entre les premier et deuxième états puisque le port 86b n'est pas utilisé, et
- lors de l'étape 130, la position λ₂ est prise égale à la position du pic de puissance de la réponse spectrale du signal optique combiné reçu sur le port 86a du commutateur 80. En effet, dans ce mode de réalisation, une seule réponse spectrale est mesurée pour le second groupe de modes.

La figure 6 représente un dispositif 180 de mesure identique au dispositif 160 sauf que l'analyseur spectral 162 est remplacé par un analyseur spectral 182. L'analyseur spectral 182 est identique à l'analyseur spectral 162 sauf que l'appareillage 164 d'acquisition est remplacé par un appareillage 184 d'acquisition. L'appareillage 184 permet d'acquérir :
- la réponse spectrale du premier groupe de modes en réponse à la seule excitation de ce premier groupe de modes, puis
- la réponse spectrale du second groupe de modes en réponse à la seule excitation de ce second groupe de modes.

Pour cela, l'appareillage 184 comporte les mêmes composants que l'appareillage 164 sauf qu'ils sont optiquement raccordés les uns aux autres différemment. Ici, la différence réside dans le fait que :
- le port 88 de sortie du commutateur 80 est optiquement raccordé directement au port 72 du circulateur 70, et
- le port 73 du circulateur est optiquement raccordé directement au port 92 de mesure du spectromètre 82.

Le fonctionnement du dispositif 180 est identique à celui du dispositif 160 sauf que, à cause du fait que le port 72 du circulateur 70 est raccordé au port 88 du commutateur 80, lorsque le commutateur 80 est dans son deuxième état, le signal optique d'excitation est transmis dans le second groupe de modes. Dans ces conditions, lorsque le premier groupe de modes est excité, seule une réponse spectrale de ce premier groupe de modes est mesurée. Aucune réponse spectrale du second groupe de modes n'est mesurée en réponse à l'excitation du premier groupe de modes. Ensuite, à l'inverse, seul le second groupe de modes est excité et, en réponse, seule une réponse spectrale de ce second groupe de modes est mesurée. Aucune réponse spectrale du premier groupe de modes n'est mesurée en réponse à l'excitation du second groupe de modes. Ainsi, dans ce mode de réalisation, les réponses spectrales des premier et second groupes sont mesurées en réponse à des excitations différentes et à des instants différents.

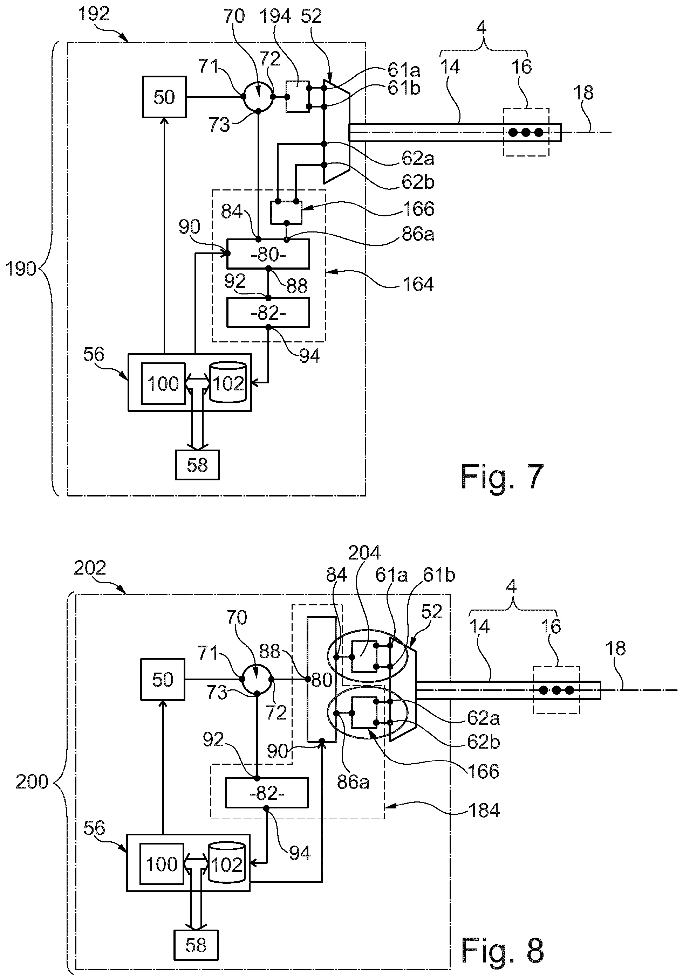

La figure 7 représente un dispositif 190 de mesure identique au dispositif 160 sauf que l'analyseur spectral 162 est remplacé par un analyseur spectral 192. L'analyseur spectral 192 est identique à l'analyseur spectral 162 sauf que le groupe de modes excité comporte plusieurs modes et le démultiplexeur 52 comporte deux ports d'entrée/sortie 61a et 61b associés chacun à un mode respectif du groupe de modes excité. Dans cet exemple, l'analyseur spectral 192 comporte un coupleur optique 194 qui raccorde simultanément le port 72 du circulateur 70 aux deux ports 61a et 61b du démultiplexeur 52. Dans ces conditions, deux modes différents du même groupe sont simultanément excités. Le signal optique reçu sur le port 84 du commutateur 80 correspond à la combinaison des signaux optiques délivrés sur les ports 61a et 61b.

Le fonctionnement du dispositif 190 est identique à celui du dispositif 160 sauf que, à cause de la présence du coupleur 194, deux modes sont simultanément excités et le signal reçu sur le port 84 résulte de la combinaison des signaux optiques délivrés sur les ports 61a et 61b.

La figure 8 représente un dispositif 200 de mesure identique au dispositif 180 sauf que l'analyseur spectral 182 est remplacé par un analyseur spectral 202. L'analyseur spectral 202 est identique à l'analyseur spectral 182 sauf que le groupe de modes excité comporte plusieurs modes et le démultiplexeur 52 comporte deux ports d'entrée/sortie 61a et 61b associés chacun à un mode respectif du groupe de modes excité. Dans cet exemple, l'analyseur spectral 202 comporte un coupleur optique 204 qui raccorde simultanément le port 84 du commutateur 80 aux deux ports 61a et 61b du démultiplexeur 52. Dans ces conditions, comme dans le mode de réalisation précédent, deux modes différents du même groupe sont simultanément excités. Le signal optique reçu sur le port 84 du commutateur 80 correspond à la combinaison des signaux optiques délivrés sur les ports 61a et 61b.

Le fonctionnement du dispositif 200 est identique à celui du dispositif 180 sauf que, à cause de la présence du coupleur 204, deux modes sont simultanément excités et le signal reçu sur le port 84 résulte de la combinaison des signaux optiques délivrés sur les ports 61a et 61b.

### Chapitre III : Variantes :

### Variantes du transducteur :

De nombreux modes de réalisation différents sont possibles pour la fibre 14. En fait, à partir du moment où la fibre optique permet la propagation d'au moins deux groupes de modes spatiaux différents, alors celle-ci peut être utilisée en tant que fibre optique multimode du transducteur 4. En particulier, il existe de nombreux profils différents de variation de l'indice de réfaction d'une fibre optique multimode dans une direction transversale. Par exemple, ce profil peut être un profil par saut d'indice ou, au contraire, un profil à gradient d'indice. Dans un profil à saut d'indice, l'indice de réfraction présente seulement deux valeurs différentes, une à l'intérieur du cœur et l'autre à l'extérieur du cœur. Dans le profil à gradient d'indice, l'indice varie continûment en suivant, par exemple, une fonction linéaire ou parabolique.

La fibre optique multimode peut être une fibre optique connue sous l'acronyme FMF (« Few Mode Fiber »), c'est-à-dire une fibre optique autorisant la propagation du signal optique selon moins de trois, ou six, groupes de modes différents.

Le réseau de Bragg 16 peut être remplacé par un réseau de Bragg à pas long, c'est-à-dire un réseau de Bragg dont le pas Λ est supérieur à 10 µm ou 100 µm. Dans ce cas, ce sont les spectres de puissance en transmission du réseau de Bragg qui sont mesurés et non pas les spectres de puissance en réflexion.

En variante, la fibre 14 comporte plusieurs réseaux de Bragg réalisés les uns derrière les autres dans son cœur. Dans ce cas, pour chaque groupe de modes, les longueurs d'onde λᵢ de chacun de ces réseaux de Bragg sont différentes. Par exemple, les longueurs d'onde λᵢ de ces différents réseaux de Bragg sont espacées les unes des autres par au moins 5 nm ou 10 nm. Grâce à cela, les réponses spectrales des différents réseaux de Bragg réalisés dans la fibre optique peuvent être isolées les unes des autres. Dans ces conditions, le même transducteur optique permet de mesurer les deux grandeurs physiques à l'emplacement de chacun de ces réseaux de Bragg en mettant en œuvre pour chacun de ces réseaux de Bragg le même procédé de mesure que celui décrit en référence à la figure 2 ou 4.

### Variantes de l'analyseur spectral:

La source optique n'est pas nécessairement une source large spectre. Par exemple, la source optique 50 peut être remplacée par une source laser accordable monochromatique qui émet un signal optique mono-fréquence à une longueur d'onde λₛ dans le domaine de l'optique. La valeur de la longueur d'onde λₛ dépend d'un signal de commande reçu sur un port de commande de la source laser. Une telle source laser est également appelée « source laser à balayage ». En effet, moyennant l'utilisation d'un signal de commande approprié, la longueur d'onde λₛ balaye toute la plage de travail. En balayant la plage de travail avec un telle source optique, il est aussi possible de mesurer les réponses spectrales du réseau de Bragg 16 dans les premier et second groupes de modes. Dans ce cas, le spectromètre 82 peut être simplifié car il n'est pas nécessaire qu'il soit capable de mesurer la puissance du signal optique reçu simultanément pour différentes longueurs d'onde.

La source optique n'est pas nécessairement une source laser. Par exemple, la source optique peut aussi être réalisée à l'aide d'une cavité de Fabry Pérot accordable. Dans ce cas, le signal de commande provoque le déplacement d'au moins un des dioptres de cette cavité de Fabry Pérot. Ce déplacement d'un dioptre provoque alors une modification de la fréquence de résonance propre de la cavité et donc une modification de la longueur d'onde λₛ.

La plage de travail peut être plus large que 100 nm. Par exemple, la largeur de cette plage de travail est, en variante, supérieure à 200 nm ou 300 nm. Il n'existe pas de limite supérieure pour la largeur de cette plage de travail si ce n'est qu'elle doit se situer dans le domaine de l'optique et qu'elle doit pouvoir être balayée par la source optique de l'analyseur spectral.

Dans une variante simplifiée, l'unité 56 détermine seulement les variations des grandeurs physiques mesurées et non pas leurs valeurs absolues. Dans ce cas, il n'est pas nécessaire de connaître les valeurs de référence G_{1,ref} et G_{2,ref} correspondant aux positions de référence λ_{1,ref} et λ_{2,ref}.

En variante, l'appareillage d'acquisition est optiquement raccordé à l'extrémité distale de la fibre 14. Dans ce cas, l'appareillage d'acquisition mesure les signaux optiques qui ont traversé le réseau 16. Dès lors, les réponses spectrales mesurées sont des spectres de puissance en transmission et non pas en réflexion. Toutefois, tout ce qui a été décrit dans le cas où ce sont les spectres de puissance en réflexion qui sont utilisés peut être transposé, sans difficulté particulière, au cas où ce sont des spectres de puissance en transmission qui sont utilisés.

### Variantes du procédé de mesure :

En variante, le groupe de modes excité n'est pas le groupe de modes qui contient le mode fondamental. Par exemple, c'est le second groupe de modes qui est excité à la place du premier groupe de modes. Pour cela, par exemple dans le cas des modes de réalisation des figures 1 et 3, les ports 72 et 73 du circulateur 70 sont optiquement raccordés, respectivement, au port 62a et au port 86a. Le port 61 du démultiplexeur 52 est directement raccordé au port 84 du commutateur 80 sans passer à travers le circulateur 70.

Le groupe de modes excités peut être différent des groupes de modes interrogés. Par exemple, en variante, un troisième groupe de modes, différent des premier et second groupes de modes interrogés, est excité pour mesurer, en réponse, les réponses spectrales du réseau 16 dans ces premier et second groupes de modes. Selon une autre alternative, la réponse spectrale du premier groupe est mesurée en excitant uniquement le second groupe et vice-versa.

Dans tous les modes de réalisation décrits, lorsque le groupe de modes excité comporte plusieurs modes, il est possible d'exciter ce groupe de modes selon l'une des alternatives suivantes :
- exciter un seul mode de ce groupe de modes,
- exciter simultanément plusieurs modes de ce groupe de modes mais pas tous, ou
- exciter simultanément tous les modes de ce groupe de modes.

Pour exciter simultanément plusieurs modes du même groupe de modes, un coupleur optique est utilisé pour transmettre simultanément le signal optique d'excitation sur les différents ports d'entrée/sortie du multiplexeur modal associées à ces modes.

En variante, le premier groupe de modes interrogé ne contient pas le mode fondamental. Dans ce cas, le premier groupe de modes contient les modes présentant un indice effectif plus faible que celui du mode fondamental.

De même, le second groupe de modes n'est pas nécessairement le groupe de modes comportant les modes spatiaux dont l'indice effectif est le plus faible. L'indice effectif des modes du second groupe de modes peut donc être plus élevé.

Dans un autre mode de réalisation, le nombre de groupes de modes différents interrogés est égal à Nm, où Nm est supérieur à deux. Dans ce cas, par exemple, des ports d'entrée/sortie supplémentaires du démultiplexeur 52 sont optiquement raccordés à des ports d'entrée supplémentaires correspondant du commutateur 80. Ensuite, lors de l'étape 130, l'unité 56 détermine pour chacun des groupes de modes interrogés une amplitude Δλᵢ respective. Enfin, lors de l'étape 132 de détermination des variations ΔG₁ et ΔG₂, le système (1) d'équations comporte autant d'équations Δλᵢ = S_{1,i}*ΔG₁ + S_{2,i}*ΔG₂ que de groupes de modes interrogés. Ainsi, dans ce cas, le système (1) d'équations à résoudre comporte Nm équations et seulement deux inconnues. Un tel système d'équations peut être résolu à l'aide d'un algorithme qui minimise l'erreur tel que la méthode des moindres carrés.

Dans une variante simplifiée, même pour les groupes interrogés qui comportent plusieurs modes, une seule réponse spectrale d'un seul mode particulier de ce groupe de modes est mesurée. Dans ce cas, lors de l'étape de détermination, l'amplitude Δλᵢ est égale à l'amplitude Δλ_{i,j} déterminée à partir de la réponse spectrale mesurée de ce seul mode particulier. Ici, l'indice j correspond à l'indice identifiant ce mode particulier.

La détermination de l'amplitude du déplacement du pic de puissance du réseau 16 dans un groupe particulier comportant plusieurs modes peut être réalisée différemment. Par exemple, en variante, au lieu de moyenner les différentes amplitudes Δλ_{i,j} déterminées à partir de chacune des réponses spectrales des différents modes de ce groupe, il est possible d'abord de moyenner les différentes réponses spectrales mesurées pour les différents modes de ce groupe afin d'obtenir une réponse spectrale moyenne. Ensuite, l'amplitude Δλᵢ est obtenue à partir de la réponse spectrale moyenne ainsi obtenue. Typiquement, dans ce cas, l'amplitude Δλᵢ est prise égale à la différence entre la position λᵢ du pic mesurée dans la réponse spectrale moyenne et la position Ài,ref.

Pour augmenter la précision des mesures, il est possible de réitérer plusieurs fois la phase 112 de mesure puis de moyenner plusieurs mesures de la variation de la même grandeur physique.

### Autres variantes :

Les première et seconde grandeurs physiques simultanément mesurables à l'aide d'un seul et même réseau de Bragg ne sont pas nécessairement, respectivement, la température et la déformation mécanique. En pratique, l'une de la température et de la déformation mécanique peut être remplacée par une autre grandeur physique différentes de la température et de la déformation mécanique. Pour cela, il suffit que le réseau de Bragg soit sensible à cette autre grandeur physique et que le déterminant S_{1,1}*S_{k,2} - S_{k,1}*S_{1,2} soit différent de zéro, où les coefficients S_{k,i} sont les coefficients de sensibilité du réseau de Bragg à cette autre grandeur physique. Par exemple, la déformation mécanique peut être remplacée par la pression hydrostatique qui s'exerce sur la fibre optique à l'emplacement du réseau de Bragg. L'autre grandeur physique peut aussi être une dose de radiation. En effet, un réseau de Bragg peut être rendu sensible à une dose de radiation, par exemple, en réalisant le cœur de la fibre optique dans un matériau photosensible. Pour cela, à titre d'illustration, le cœur est réalisé en germanosilicate puis le réseau de Bragg est inscrit dans ce cœur. Ensuite, ce réseau de Bragg est transformé en un réseau de Bragg sensible à une dose du rayonnement à mesurer en l'exposant à un rayonnement ultraviolet qui crée des centres colorés issus de la recombinaison des liaisons entre le germanium et la silice. Lorsqu'ils sont soumis à une dose du rayonnement à mesurer, ces centres colorés sont modifiés, conduisant à un décalage des longueurs d'onde λᵢ du réseau de Bragg.

L'analyseur spectral peut aussi être adapté pour mesurer simultanément les variations de Ng grandeurs physiques différentes, où Ng est supérieur à deux. Ceci est illustré dans le cas particulier de trois grandeurs physiques simultanément mesurées telles que la température, la déformation mécanique et une dose de radiation. Puisqu'il y a trois grandeurs physiques à mesurer à l'aide du même réseau de Bragg, il faut au moins interroger trois groupes de modes distincts afin de déterminer trois amplitudes Δλᵢ. Dans ce cas, le système (1) d'équations comporte trois équations de la forme suivante : Δλᵢ = S_{1,i}*ΔG₁ + S_{2,i}*ΔG₂ + S_{3,i}*ΔG₃ , où ΔG₃ est la variation de la dose de radiation et S_{3,i} est le coefficient de sensibilité à la variation ΔG₃. Dès lors, à partir des mesures des amplitudes Δλᵢ dans trois groupes de modes différents, il est possible d'établir les variations correspondantes de la température, de la déformation mécanique et de la dose de radiation. Ce qui vient d'être décrit dans ce cas où Ng est égal à trois peut être généralisé au cas où Ng est supérieur à trois à partir du moment où le système (1) d'équations est solvable.

Plusieurs des variantes décrites ci-dessus peuvent être combinées dans un même mode de réalisation.

### Chapitre IV : Avantages des modes de réalisation décrits :

Le fait d'exciter un seul groupe de modes à la fois pour mesurer une réponse spectrale dans un groupe de modes donné permet d'éviter la superposition des réponses spectrales des différents groupes de modes qui est observée lorsque plusieurs groupes de modes différents sont simultanément excités. Cela simplifie et augmente la précision sur la détermination de l'amplitude Δλᵢ. De plus, le coefficient de sensibilité du réseau de Bragg à une même grandeur physique est différent selon le groupe de modes utilisé pour déterminer l'amplitude Δλᵢ. Dès lors, en exploitant ces deux caractéristiques, le même réseau de Bragg peut être utilisé pour mesurer les variations de deux grandeurs physiques indépendantes l'une l'autre et cela en déterminant seulement des amplitudes Δλᵢ. Or, l'amplitude Δλᵢ est mesurable avec une précision plus grande que, par exemple, l'amplitude d'un pic de puissance. De plus, le procédé décrit ici n'impose aucune limitation sur le type de fibre optique multimode utilisée ou le type de réseau de Bragg utilisé. En particulier, le procédé de mesure fonctionne aussi bien avec des fibres optiques FMF qu'avec des fibres optiques multimodes qui autorisent la propagation du signal optique selon un nombre beaucoup plus grand de groupes de modes. Ainsi, le procédé de mesure décrit ici est à la fois simple et précis.

Le fait d'utiliser les réponses spectrales mesurées dans plusieurs modes du même groupe de modes pour déterminer l'amplitude Δλᵢ du déplacement du pic de puissance dans ce groupe de modes, permet d'améliorer la précision du procédé.

Le fait de combiner, à l'aide d'un coupleur optique, les signaux optiques qui se propagent dans différents modes d'un même groupe de modes puis de mesurer la réponse spectrale de ce groupe à partir de ce signal optique combiné, permet d'améliorer la précision du procédé sans pour autant avoir à mesurer et à traiter individuellement chacun des signaux optiques qui se propagent dans les différents modes de ce groupe de modes.

Le fait que les réponses spectrales mesurées soient des spectres de puissance en réflexion simplifie la mise en œuvre du procédé car l'excitation et la mesure se font à partir de la même extrémité de la fibre optique 14.

Le fait d'exciter seulement un groupe de modes et de mesurer, en réponse, les réponses spectrales dans deux groupes de modes distincts permet de simplifier le procédé de mesure puisqu'un seul groupe de mode est excité pour mesurer des réponses spectrales dans plusieurs groupes de modes distincts.

Le fait d'exciter le groupe du mode fondamental permet d'améliorer le couplage entre le groupe excité et les groupes interrogés lorsque les motifs du réseau de Bragg sont situés au centre du cœur de la fibre optique multimode.

Le fait d'utiliser, pour mesurer les réponses spectrales, des groupes de modes dont les indices effectifs sont aussi éloignés que possible l'un de l'autre augmente les différences entre les coefficients de sensibilité. Cela permet, en fin de compte, d'améliorer la précision du procédé de mesure.

Le fait d'utiliser un analyseur spectral capable d'acquérir simultanément plusieurs réponses spectrales dans plusieurs modes d'un même groupe de modes permet, à précision égale, de rendre la mesure plus rapide.

Le fait d'utiliser un commutateur optique pour raccorder en alternance plusieurs ports de sortie du multiplexeur modal au même port de mesure du spectromètre 82 permet d'utiliser un spectromètre monovoie pour mesurer plusieurs réponses spectrales. Cela simplifie donc la réalisation de l'appareillage d'acquisition.

Le fait d'exciter simultanément plusieurs modes d'un même groupe de modes permet d'améliorer le rapport signal sur bruit des réponses spectrales mesurées et donc d'améliorer la précision de la mesure.

## Revendications

1. Procédé de mesure de variations d'une première et d'une seconde grandeurs physiques indépendantes à l'aide d'un transducteur optique comportant :
- une fibre optique multimode contenant un cœur qui s'étend le long d'un axe longitudinal et à l'intérieur duquel un signal optique guidé par cette fibre optique multimode est apte à se propager le long de l'axe longitudinal de la fibre optique multimode selon au minimum un premier et un deuxième groupes de modes spatiaux différents, et
- un réseau de Bragg réalisé dans le cœur de la fibre optique multimode et apte à générer des signaux optiques qui se propagent dans les premier et deuxième groupes de modes spatiaux en réponse à l'excitation d'un seul groupe de modes spatiaux de la fibre optique multimode, les réponses spectrales de ce réseau de Bragg dans, respectivement, le premier et le second groupes de modes spatiaux comportant, respectivement, un premier et un second pics de puissance dont les positions varient en fonction des variations à la fois des première et seconde grandeurs physiques à l'emplacement de ce réseau de Bragg, le coefficient de sensibilité qui relie la variation de la position du premier pic à une variation de la première grandeur physique étant différent du coefficient de sensibilité qui relie la variation de la position du second pic à une variation de la première grandeur physique,
**caractérisé en ce que** le procédé comporte les étapes suivantes :
- en réponse à l'excitation d'un seul groupe de modes spatiaux de la fibre optique multimode, la mesure (122 ; 150) d'une réponse spectrale du réseau de Bragg dans, respectivement, le premier et le second groupes de modes spatiaux, puis
- la détermination (130) d'une première et d'une seconde amplitudes de déplacement à partir des réponses spectrales mesurées uniquement dans, respectivement, le premier et le second groupes de modes spatiaux, la première amplitude de déplacement étant représentative de l'amplitude du déplacement, par rapport à une première position de référence prédéterminée, du premier pic de puissance dans la réponse spectrale du réseau de Bragg dans le premier groupe de modes spatiaux et la seconde amplitude de déplacement étant représentative de l'amplitude du déplacement, par rapport à une seconde position de référence, du second pic de puissance dans la réponse spectrale du réseau de Bragg dans le second groupe de modes spatiaux, les première et seconde positions de références étant égales aux positions, respectivement, du premier et du second pics de puissance lorsque les première et seconde grandeurs physiques ont des valeurs de référence, puis
- l'établissement (132) des variations de la première et de la seconde grandeurs physiques par rapport à leurs valeurs de référence respectives à partir des première et seconde amplitudes de déplacement déterminées.

2. Procédé selon la revendication 1, dans lequel :
- l'étape (122 ; 150) de mesure comporte, pour le second groupe de modes spatiaux qui comporte plusieurs modes spatiaux, la mesure de plusieurs réponses spectrales, chacune de ces réponses spectrales étant mesurée dans un mode spatial distinct de ce second groupe de modes spatiaux, puis
- lors de la détermination (130) de la première et de la seconde amplitudes du déplacement, la seconde amplitude du déplacement est déterminée à partir des réponses spectrales mesurées dans plusieurs modes spatiaux distincts du second groupe de modes spatiaux.

3. Procédé selon la revendication 1, dans lequel l'étape (122 ; 150) de mesure comporte, pour le second groupe de modes spatiaux qui comporte plusieurs modes spatiaux :
- la combinaison, à l'aide d'un coupleur optique, des signaux optiques réfléchis ou transmis par le réseau de Bragg et qui se propagent dans plusieurs modes spatiaux distincts du second groupe de modes spatiaux, pour obtenir un signal optique combiné, puis
- la mesure de la réponse spectrale dans le second groupe de modes spatiaux à partir de ce signal optique combiné.

4. Procédé selon l'une quelconque des revendications précédentes, dans lequel le pas du réseau de Bragg réalisé dans le cœur de la fibre optique est inférieur à 10 µm et, lors de l'étape (122 ; 150) de mesure, chacune des réponses spectrales est mesurée à partir d'un signal optique réfléchi par le réseau de Bragg.

5. Procédé selon l'une quelconque des revendications précédentes, dans lequel l'étape (122 ; 150) de mesure comporte :
- l'excitation (120) d'un seul groupe de modes spatiaux de la fibre optique multimode, et
- en réponse à l'excitation de ce seul groupe de modes spatiaux, la mesure (122 ; 150) d'au moins une réponse spectrale du réseau de Bragg dans, respectivement, le premier et le second groupes de modes spatiaux.

6. Procédé selon la revendication 5, dans lequel l'excitation (120) d'un seul groupe de modes spatiaux consiste à exciter le groupe de modes spatiaux qui comporte le mode spatial fondamental.

7. Procédé selon l'une quelconque des revendications précédentes, dans lequel le premier groupe de modes spatiaux est celui qui comporte le mode spatial fondamental et le second groupe de modes spatiaux est celui qui comporte les modes spatiaux dont l'indice effectif est le plus faible.

8. Procédé selon l'une quelconque des revendications précédentes, dans lequel les première et seconde grandeurs physiques sont choisies dans le groupe composé d'une température, d'une déformation mécanique, d'une pression hydrostatique et d'une dose de radiation.

9. Dispositif de mesure de variations d'une première et d'une seconde grandeurs physiques indépendantes, ce dispositif comportant :
- un transducteur optique (4) comportant :
- une fibre optique multimode (14) contenant un cœur qui s'étend le long d'un axe longitudinal (18) et à l'intérieur duquel un signal optique guidé par cette fibre optique multimode est apte à se propager le long de l'axe longitudinal de la fibre optique multimode selon un premier et un deuxième groupes de modes spatiaux différents, et
- un réseau de Bragg (16) réalisé dans le cœur de la fibre optique multimode et apte à générer des signaux optiques qui se propagent dans les premier et deuxième groupes de modes spatiaux en réponse à l'excitation d'un seul groupe de modes spatiaux de la fibre optique multimode, les réponses spectrales de ce réseau de Bragg dans, respectivement, le premier et le second groupes de modes spatiaux comportant, respectivement, un premier et un second pics de puissance dont les positions varient en fonction des variations à la fois des première et seconde grandeurs physiques à l'emplacement de ce réseau de Bragg, le coefficient de sensibilité qui relie la variation de la position du premier pic à une variation de la première grandeur physique étant différent du coefficient de sensibilité qui relie la variation de la position du second pic à une variation de la première grandeur physique,
- un analyseur spectral (20 ; 142 ; 162 ; 182) configuré pour établir les variations des première et seconde grandeurs physiques à partir des réponses spectrales du réseau de Bragg,
**caractérisé en ce que** l'analyseur spectral (20 ; 142 ; 162 ; 182) est configuré pour exécuter les étapes suivantes :
- en réponse à l'excitation d'un seul groupe de modes spatiaux de la fibre optique multimode, la mesure de réponses spectrales du réseau de Bragg dans, respectivement, le premier et le second groupes de modes spatiaux, puis
- la détermination d'une première et d'une seconde amplitudes de déplacement à partir des réponses spectrales mesurées uniquement dans, respectivement, le premier groupe et le second groupes de modes spatiaux, la première amplitude de déplacement étant représentative de l'amplitude du déplacement, par rapport à une première position de référence prédéterminée, du premier pic de puissance dans la réponse spectrale du réseau de Bragg dans le premier groupe de modes spatiaux et la seconde amplitude de déplacement étant représentative de l'amplitude du déplacement, par rapport à une seconde position de référence, du second pic de puissance dans la réponse spectrale du réseau de Bragg dans le second groupe de modes spatiaux, les première et seconde positions de références étant égales aux positions, respectivement, du premier et du second pics de puissance lorsque les première et seconde grandeurs physiques ont des valeurs de référence, puis
- l'établissement des variations de la première et de la seconde grandeurs physiques par rapport à leurs valeurs de référence respectives à partir des première et seconde amplitudes de déplacement déterminées.

10. Dispositif selon la revendication 9, dans lequel l'analyseur spectral comporte :
- une source optique (50) apte à générer un signal optique d'excitation,
- un démultiplexeur modal (52) optiquement raccordé à la source optique et à une extrémité de la fibre optique multimode, ce démultiplexeur modal étant apte à transmettre le signal optique généré par la source optique dans un seul groupe de modes spatiaux excité et à diriger les signaux optiques réfléchis par le réseau de Bragg dans un premier mode spatial du premier groupe de modes spatiaux et dans un deuxième mode spatial du second groupe de modes spatiaux, vers, respectivement, un premier et un deuxième ports (61 ; 62a) de sortie,
- un appareillage (54 ; 144 ; 164 ; 184) d'acquisition apte à mesurer des réponses spectrales dans chacun des premier et second groupes de modes spatiaux à partir des signaux optiques dirigés, respectivement, vers le premier et le deuxième ports de sortie, et
- une unité électronique (56) de traitement électriquement raccordée à l'appareillage d'acquisition, cette unité électronique de traitement étant configurée :
- pour déterminer la première et la seconde amplitudes de déplacement à partir des réponses spectrales mesurées par l'appareillage d'acquisition dans, respectivement, le premier et le second groupes de modes spatiaux, et
- pour établir les variations de la première et de la seconde grandeurs physiques à partir des première et seconde amplitudes de déplacement déterminées.

11. Dispositif selon la revendication 10, dans lequel :
- le démultiplexeur modal (52) comporte un troisième port (62b) de sortie sur lequel est uniquement dirigé le signal optique réfléchi ou transmis par le réseau de Bragg dans un troisième mode spatial du second groupe de modes spatiaux différent du deuxième mode spatial,
- l'appareillage d'acquisition (164 ; 184) comporte :
- un coupleur optique (166) qui combine les signaux optiques délivrés sur les deuxième et troisième ports de sortie pour obtenir un signal optique combiné, et
- un spectromètre (82) équipé d'un port (92) de mesure sur lequel est reçu le signal optique combiné pour mesurer la réponse spectrale du réseau de Bragg dans le second groupe de modes spatiaux à partir de ce signal optique combiné.

12. Dispositif selon la revendication 10, dans lequel :
- le démultiplexeur modal (52) comporte un troisième port (62b) de sortie sur lequel est uniquement dirigé le signal optique réfléchi ou transmis par le réseau de Bragg dans un troisième mode spatial du second groupe de modes spatiaux différent du deuxième mode spatial,
- l'appareillage d'acquisition comporte :
- un spectromètre (146) équipé d'un premier et d'un second ports (86a, 86b) de mesure optiquement raccordés, respectivement, au deuxième et troisième ports (62a, 62b) de sortie pour mesurer, en parallèle, des réponses spectrales du réseau de Bragg, respectivement, dans le deuxième et le troisième modes spatiaux du second groupe de modes spatiaux, et
- l'unité électronique (56) de traitement est configurée pour déterminer la seconde amplitude de déplacement à partir des réponses spectrales mesurées dans les deuxième et troisième modes spatiaux du second groupe de modes spatiaux.

13. Dispositif selon la revendication 10, dans lequel l'appareillage d'acquisition comporte :
- un spectromètre (82) équipé d'un port (92) de mesure, et
- un commutateur optique (80) apte à raccorder optiquement, en réponse à une commande de commutation émise par l'unité électronique de traitement, le premier port (61) de sortie au port (92) de mesure du spectromètre et, en alternance, le deuxième port (62a) de sortie au port de mesure du spectromètre pour mesurer, l'une après l'autre, les réponses spectrales du réseau de Bragg dans les premier et second groupes de modes.

14. Dispositif selon la revendication 10, dans lequel l'analyseur spectral (182) comporte un coupleur optique (166) apte à raccorder optiquement la source optique (50) simultanément à plusieurs ports d'entrée (62a, 62b) du démultiplexeur modal pour exciter simultanément plusieurs modes spatiaux d'un même groupe de modes spatiaux de la fibre optique multimode.

15. Dispositif selon l'une quelconque des revendications 9 à 14, dans lequel la surface transversale des motifs du réseau de Bragg (16) est inférieure à pₑ*S_{c14}, où :
- pₑ est un nombre réel supérieur à 0,01 et inférieur à 0,99, et
- S_{c14} est la surface de la section transversale du cœur de la fibre optique (14).
